# EUROPÄISCHE PATENTSCHRIFT

(11) **EP 2 684 271 B1**
(45) Veröffentlichungstag und Bekanntmachung des Hinweises auf die Patenterteilung: **19.07.2017**
(21) Anmeldenummer: 12701323.3
(22) Anmeldetag: 12.01.2012
(51) Int. Cl.: H02J 7/00, H02J 9/00, H01M 2/34, H01M 10/42, H01M 10/44

(54) **ENERGIESPEICHER UND ENERGIESPEICHERSYSTEM**
ENERGY STORAGE MEANS AND ENERGY STORAGE SYSTEM
ACCUMULATEUR D' ÉNERGIE ET SYSTÈME D' ACCUMULATEUR D' ÉNERGIE

(30) Priorität: 11.03.2011 DE 102011005417
(43) Veröffentlichungstag der Anmeldung: 15.01.2014
(73) Patentinhaber: Robert Bosch GmbH, 70442 Stuttgart (DE)
(72) Erfinder: CLAUS, Holger, 70569 Stuttgart (DE)
(86) Internationale Anmeldenummer: PCT/EP2012/050447
(87) Internationale Veröffentlichungsnummer: WO 2012/123139

(56) Entgegenhaltungen:
- EP-A2- 1 780 867
- US-A- 5 783 998
- US-A1- 2003 137 279
- US-A1- 2003 155 890
- US-A1- 2005 077 878
- US-A1- 2006 087 286
- US-A1- 2009 145 945

## Beschreibung

Die Erfindung betrifft einen aufladbaren elektrischen Energiespeicher und ein System mit dem Energiespeicher.

### Stand der Technik

Im Bereich elektrischer Kleingeräte ist es üblich, elektrische Energiespeicher einzusetzen, die von dem Kleingerät trennbar sind, um elektrisch wieder aufgeladen zu werden. Während des Aufladens kann ein weiterer Energiespeicher in das Kleingerät eingesetzt werden, so dass dieses während des Aufladens weiter betrieben werden kann. Häufig ist es auch möglich, die Energiespeicher an unterschiedlichen elektrischen Kleingeräten im Wechsel einzusetzen, beispielsweise an einem Akkuschrauber und einer Lampe.

Bekannte Energiespeicher umfassen eine Steuereinrichtung, welche sowohl einen Aufladevorgang als auch einen Entladevorgang des Energiespeichers überwacht. Dadurch soll ein Energiemanagement verbessert und die Gefahr einer Beschädigung bzw. Zerstörung eines der Geräte oder des Energiespeichers durch inkorrekte Ladung oder Entladung verringert werden. Die Steuereinrichtung ist als elektronische Schaltung aufgebaut und überwacht Parameter wie eine oder mehrere Zellenspannungen eines Akkumulators des Energiespeichers sowie gegebenenfalls eine oder mehrere Zellentemperaturen. Die Steuereinrichtung kann zum Austausch von Informationen mit einer weiteren Steuereinrichtung verbindbar sein, die in dem Kleingerät bzw. dem Ladegerät angeordnet ist. Die Steuereinrichtung wird üblicherweise durch die elektrische Energie des Akkumulators betrieben, wobei zur Vermeidung von Entladung bei Lagerung zum Aufbau der Steuereinrichtung besonders Komponenten mit niedrigem Stromverbrauch bzw. mit einem besonders stromsparenden Modus ("sleep-mode") verwendet werden.
EP 1 337 025 A2 zeigt ein Ladegerät für einen elektrischen Energiespeicher, das elektrisch von einem Versorgungsnetz getrennt wird, wenn kein Energiespeicher in das Ladegerät eingelegt ist, um eine Energieaufnahme des Ladegeräts außerhalb des Ladebetriebs zu minimieren.
Eine Stromaufnahme der Steuereinrichtung ist jedoch auch dann vorhanden, wenn der Energiespeicher nicht mit einem Gerät verbunden ist. Im Laufe einer längeren Lagerzeit kann die Leistungsfähigkeit des Energiespeichers durch die Entladung des Steuergeräts beeinträchtigt sein. Unter ungünstigen Umständen kann der Akkumulator des Energiespeichers sogar durch die Steuereinrichtung tiefentladen und somit beschädigt oder gar zerstört werden.
US 2003/155890 A1 zeigt ein System mit einem Energiespeicher, der eine Steuereinrichtung umfasst, die mittels eines Schalters vom Energiespeicher trennbar ist.
US2003/137279 A1 zeigt einen Energiespeicher mit einer Steuereinrichtung, die dazu eingerichtet ist, sich selbst vom Energiespeicher zu trennen, nachdem eine elektrische Last vom Energiespeicher getrennt wurde.
Der Erfindung liegt die Aufgabe zugrunde, einen Energiespeicher und ein Energiespeichersystem anzugeben, welches auch eine längere Lagerung des Energiespeichers erlaubt.
Die Aufgabe wird durch einen aufladbaren Energiespeicher mit den Merkmalen des Anspruchs 1 bzw. durch ein Energiespeichersystem mit den Merkmalen von Anspruch 5 gelöst. Unteransprüche geben bevorzugte Ausführungsformen an.

Ein Energiespeicher gemäß dem Oberbegriff des Anspruchs 1 wird in US 2003/0155890 A1 offenbart.

### Offenbarung der Erfindung

Ein erfindungsgemäßer aufladbarer Energiespeicher umfasst einen aufladbaren elektrischen Akkumulator, eine Schnittstelle zur Verbindung des Akkumulators mit einem Gerät zum Energieaustausch und eine Steuereinrichtung zur Steuerung des Energieaustauschs des Akkumulators. Dabei umfasst die Steuereinrichtung einen Versorgungsspannungsanschluss, der mit dem Akkumulator verbunden ist, wenn an der Schnittstelle ein Gerät zum Energieaustausch angeschlossen ist, und ansonsten vom Akkumulator getrennt ist. Ferner umfasst die Schnittstelle ein erstes Leitelement, das mit dem Akkumulator verbunden ist, sowie ein vom ersten getrenntes zweites Leitelement, das mit dem Versorgungsspannungsanschluss verbunden ist, wobei die beiden Leitelemente derart an der Schnittstelle angeordnet sind, dass sie gemeinsam von einem korrespondierenden Leitelement des Geräts zum Energieaustausch kontaktierbar sind.

Die Trennung des Versorgungsspannungsanschlusses der Steuereinrichtung vom Akkumulator, während der Energiespeicher nicht verwendet wird, verhindert während dieser Zeit ein Entladen des Akkumulators durch die Steuereinrichtung.

Ein Lagern des Energiespeichers außerhalb eines Geräts zum Energieaustausch kann daher unproblematisch sein. Eine durch das Gerät aus dem Energiespeicher entnehmbare elektrische Energie kann somit maximiert sein. Außerdem können zum Aufbau der Steuereinrichtung auch Komponenten verwendet werden, die sich nicht durch eine besonders niedrige Energieaufnahme bzw. einen besonders stromsparenden Modus ("sleep-mode") auszeichnen. Eine Auswahl von Bauelementen kann dadurch vereinfacht und Herstellungskosten für die Steuereinrichtung gesenkt sein.

Die beiden Leitelemente des Energiespeichers werden also erst beim Einlegen des Energiespeichers in das Gerät elektrisch miteinander verbunden. Diese einfache Anordnung erfordert keine zusätzlichen Bauteile und kann kostengünstig realisierbar sein.

Das erste Leitelement kann dazu eingerichtet sein, Energie zwischen dem Gerät und dem Akkumulator zu übertragen. Das erste Leitelement kann ein Ladeanschluss des Akkumulators sein, so dass gegenüber einem bekannten aufladbaren Energiespeicher ein zusätzlicher Aufwand auf das zweite Element beschränkt sein kann. Entwicklungs- bzw. Herstellungskosten für den Energiespeicher können dadurch gering gehalten werden.

In beiden beschriebenen Ausführungsformen kann die Steuereinrichtung einen weiteren Versorgungsspannungsanschluss aufweisen, der fest mit dem Akkumulator verbunden ist. Das Aktivieren bzw. Deaktivieren der Steuereinrichtung mittels des Schalters bzw. mittels der Leitelemente beschränkt sich somit nur auf den einen der Versorgungsspannungsanschlüsse. Der weitere Versorgungsspannungsanschluss kann mit einem Masseanschluss des Akkumulators verbunden sein. Der geschaltete Versorgungsspannungsanschluss der Steuereinrichtung betrifft somit eine positive Versorgungsspannung. Dieser Aufbau ist üblich und besonders einfach, wodurch Herstellungskosten weiter gering gehalten sein können.

Ein System zur Energiespeicherung umfasst den beschriebenen Energiespeicher und ein Gerät zum Energieaustausch, das dazu eingerichtet ist, derart mit der Schnittstelle verbunden zu werden, dass der Versorgungsspannungsanschluss der Steuereinrichtung mit dem Akkumulator verbunden ist.

Bevorzugterweise umfasst das Gerät wenigstens eine Ladeeinrichtung und/oder einen mittels des Akkumulators betreibbaren elektrischen Verbraucher. Das System kann somit flexibel für ein Zusammenspiel eines oder mehrerer Energiespeicher an einem oder mehreren Geräten ausgelegt werden. Hierfür kann der Energiespeicher elektrisch und mechanisch zum Betrieb an einer Vielzahl von alternativen Geräten eingerichtet sein und mehrere Energiespeicher können sich beispielsweise durch ihre Energiespeicherfähigkeit unterscheiden.

Die Erfindung wird nun mit Bezug auf die beigefügten Figuren näher beschrieben, in denen:
- Fig. 1: ein System verschiedener Geräte mit untereinander austauschbaren Energiespeichern;
- Fig. 2: eine schematische Darstellung eines der Energiespeicher aus Fig. 1; und
- Fig. 3: eine weitere Darstellung eines der Energiespeicher aus Fig. 1
darstellt.

### Genaue Beschreibung von Ausführungsbeispielen

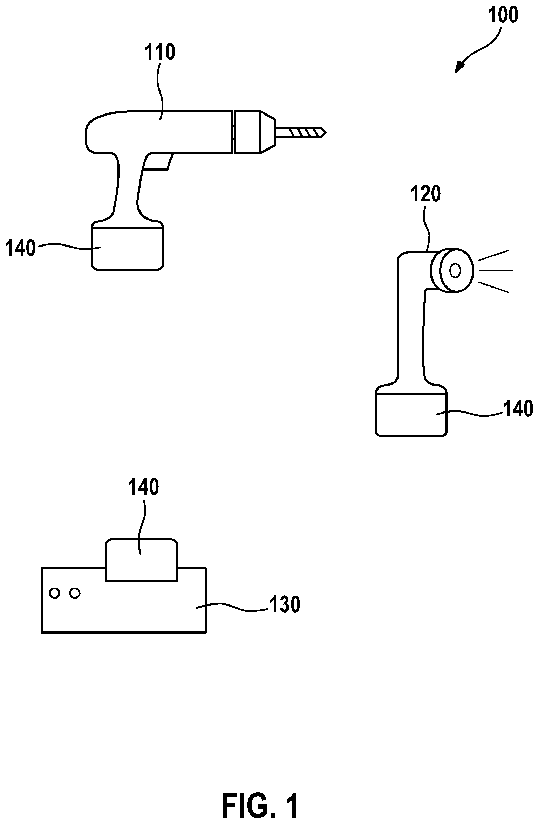

Fig. 1 zeigt ein System 100 verschiedener Geräte. Das System umfasst einen Akkuschrauber 110, eine Lampe 120 und ein Ladegerät 130, sowie eine Anzahl Energiespeicher 140.

An jedem der Geräte 110 bis 130 ist ein Energiespeicher in Form eines Akkupacks 140 angebracht. Der Akkuschrauber 110 und die Lampe 120 stellen elektrische Verbraucher dar, die mittels der elektrischen Energie, die in dem Akkupack 140 gespeichert ist, betreibbar sind. Das Ladegerät 130 dient dazu, elektrische Energie im Akkupack 140 für eine spätere Entnahme durch eines der Verbrauchergeräte 110 oder 120 einzulagern.

Das Akkupack 140 ist mechanisch und elektrisch dazu eingerichtet, mit jedem der Geräte 110 bis 130 verbunden zu werden. Steht mehr als nur ein Akkupack 140 zur Verfügung, so kann wenigstens eines der Verbrauchergeräte 110, 120 mit einem der Akkupacks 140 verwendet werden, während gleichzeitig ein anderes Akkupack 140 im Ladegerät 130 aufgeladen wird. Weitere Akkupacks 140 können gegebenenfalls zur späteren Verwendung in aufgeladenem Zustand vorgehalten werden.

Die in Fig. 1 dargestellten Geräte 110 bis 130 sind exemplarischer Natur. In anderen Ausführungsformen können mehr oder weniger und insbesondere auch andere Geräte 110 bis 130 mit dem Akkupack 140 kombinierbar sein. Dabei kann auch ein Gerät umfasst sein, welches dazu eingerichtet ist, das Akkupack 140 sowohl aufzuladen als auch zu entladen.

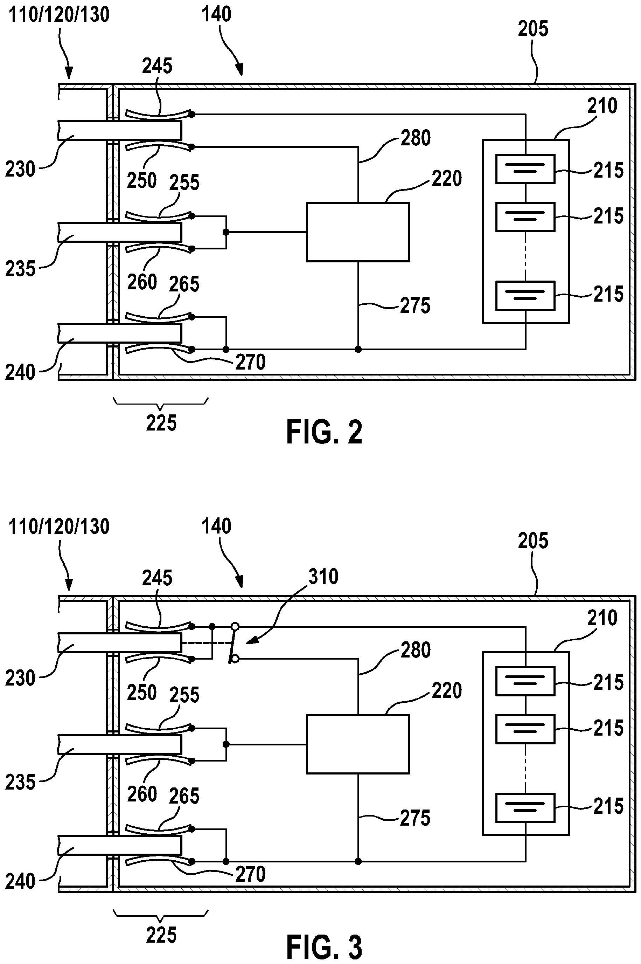

Fig. 2 zeigt eine schematische Darstellung des Energiespeichers 140 aus Fig. 1. Der Energiespeicher 140 ist mit einem der Geräte 110 bis 130 des Systems 100 auf Fig. 1 verbunden. Die Darstellung von Fig. 2 stellt im Wesentlichen eine Schnittzeichnung dar, wobei einige Elemente des Akkupacks 140 lediglich als elektrische Schaltsymbole dargestellt sind.

Das Akkupack 140 umfasst ein Gehäuse 205, in dem ein Akkumulator 210 mit einer Anzahl Zellen 215 und eine Steuereinrichtung 220 angeordnet sind. Ferner umfasst das Akkupack 140 innerhalb des Gehäuses 205 eine Schnittstelle 225 zur Verbindung des Akkupacks 140 mit einem der Geräte 110 bis 130 aus Fig. 1. Die Schnittstelle 225 kann auch eine mechanische Fixierung des Akkupacks 140 an dem Gerät 110 bis 130 umfassen, was in Fig. 2 nicht dargestellt ist.

Die Schnittstelle 225 ist dazu eingerichtet, einen elektrischen Kontakt zu einem ersten Stiftkontakt 230, einem zweiten Stiftkontakt 235 und einem dritten Stiftkontakt 240 eines der Geräte 110 bis 130 herzustellen. Der erste Stiftkontakt 230 des Geräts 110 bis 130 steht mit zwei einander gegenüberliegenden Leitblechen 245 und 250 des Akkupacks 140 in Anlage. In entsprechender Weise ist der zweite Stiftkontakt 235 zwischen Kontaktblechen 255 und 260 und der dritte Stiftkontakt 240 zwischen Kontaktblechen 265 und 270 angeordnet.

Die einander gegenüberliegenden Kontaktbleche 255 und 260 bzw. 265 und 270 sind paarweise elektrisch miteinander verbunden. In anderen Ausführungsformen können der zweite Stiftkontakt 235 und/oder der dritte Stiftkontakt 240 jeweils nur von einem Kontaktblech 255 bis 270 der Schnittstelle 225 des Akkupacks 140 kontaktiert sein. Die Kontaktbleche können an jedem der Stiftkontakte 230 - 240 wahlweise auch stirnseitig eingreifen.

Die Kontaktbleche 265 und 270 sind mit einem negativen Anschluss des Akkumulators 210 und einem negativen Versorgungsspannungsanschluss 275 der Steuereinrichtung 220 verbunden. Die Kontaktbleche 255 und 260 sind mit einem Kommunikationsanschluss der Steuereinrichtung 220 verbunden. Über den Kommunikationsanschluss wird eine elektrische Verbindung zwischen dem Akkupack 140 und dem Gerät 110 bis 130 hergestellt, über die ein Datenaustausch möglich ist. Anhand der übertragenen Daten kann eine interne oder externe Steuerung einer Energieübertragung zwischen dem Akkupack 140 und dem Gerät 110 bis 130 gesteuert werden. Ferner können Informationen übertragen werden, die mittels einer nicht eingezeichneten Anzeigeeinrichtung einem Benutzer des Akkupacks 140 dargeboten werden können.
Das Leitblech 250 ist mit einem positiven Versorgungsspannungsanschluss 280 der Steuereinrichtung verbunden und das Kontaktblech 245 ist elektrisch mit einem positiven Anschluss des Akkumulators 210 verbunden.
Während das Akkupack 140 am Gerät 110 bis 130 angebracht ist, besteht ein elektrischer Kontakt zwischen dem ersten Stiftkontakt 230 und beiden Kontaktblechen 245 und 250. Dadurch ist der positive Versorgungsspannungsanschluss 280 der Steuereinrichtung 220 über das Leitblech 250, den ersten Stiftkontakt 230 und das Leitblech 245 mit dem positiven Anschluss des Akkumulators 210 verbunden. Wird das Akkupack 140 von dem Gerät 110 bis 130 getrennt, so besteht keine elektrische Verbindung zwischen den Leitblechen 245 und 250 mehr, so dass die Steuereinrichtung 220 nicht durch elektrische Energie betrieben wird, die aus dem Akkumulator 210 entnommen wird. So kann das Akkupack 140 getrennt von dem Gerät 110 bis 130 gelagert werden, ohne dass Energie durch die Steuereinrichtung 220 entnommen wird.
Anstelle von Stiftkontakten 230 bis 240, die in Kontaktbleche 245 bis 270 eingreifen, sind auch beliebige andere Kontaktelemente zwischen dem Gerät 110 bis 130 und dem Akkupack 140 denkbar, etwa Biegezungen oder Federkontakte. Entscheidend ist, dass die elektrische Verbindung des positiven Anschlusses des Akkumulators 210 mit dem positiven Versorgungsspannungsanschluss 280 der Steuereinrichtung 220 durch ein Leitelement des Geräts 110 bis 130 erfolgt. Dadurch ist sicher gestellt, dass die Steuereinrichtung 220 vom positiven Anschluss des Akkumulators 210 getrennt ist, wenn das Akkupack 140 mit keinem Gerät 110 bis 130 verbunden ist. In einer weiteren Ausführungsform kann die Trennung der Steuereinrichtung 220 in entsprechender Weise auch von einem negativen Anschluss des Akkumulators 210 erfolgen.

Fig. 3 zeigt eines Beispiel eines Akkupacks 140 aus Fig. 1, welches aber keine Ausführungsform der Erfindung darstellt. Dieses Beispiel entspricht weitgehend der oben mit Bezug auf Fig. 2 beschriebenen Ausführungsform. Im Unterschied zu dieser ist jedoch ein Taster 310 vorgesehen, von dem ein erster Anschluss mit dem positiven Versorgungsspannungsanschluss 280 der Steuereinrichtung 220 und ein zweiter Anschluss mit dem positiven Anschluss des Akkumulators 210 verbunden ist. Außerdem sind die Kontaktbleche 245 und 250 elektrisch miteinander verbunden und führen beide zum positiven Anschluss des Akkumulators 210.
Der Taster 310 ist dazu eingerichtet, mittels des ersten Stiftkontakts 230 des Geräts 110 bis 130 geschlossen zu werden. Dadurch ist der positive Versorgungsspannungsanschluss 280 der Steuereinrichtung 220 mit dem positiven Anschluss des Akkumulators 210 verbunden, solange das Akkupack 140 an dem Gerät 110 bis 130 angebracht ist. Wird das Akkupack 140 von dem Gerät 110 bis 130 entfernt, so öffnet eine eingebaute Feder den Taster 310, so dass die Steuereinrichtung 220 nicht mehr durch Energie des Akkumulators 210 betrieben werden kann.

In alternativen Beispielen ist ein anderes mechanisches Element des Geräts 110 bis 130 zur Betätigung des Tasters 310 vorgesehen. Das Element kann insbesondere den zweiten Stiftkontakt 235 oder den dritten Stiftkontakt 240 umfassen. Ferner kann der Taster 310 beispielsweise auch durch einen dazu ausgebildeten Vorsprung eines Gehäuses des Geräts 110 bis 130 betätigbar sein.
Der dargestellte Taster 310 ist ein einpoliger Schließtaster (single pole, single throw, normally open: SPSTNO). In einer weiteren Ausführungsform kann der Taster 310 auch ein zweipoliger Schließtaster sein (double pole, double throw, normally open, DPDTNO), wobei der zweite Pol zum Herstellen bzw. Trennen der elektrischen Verbindung zwischen der Steuereinrichtung 220 und dem zweiten Stiftkontakt 235 bzw. dem negativen Versorgungsspannungsanschluss 275 der Steuereinrichtung 220 und dem dritten Stiftkontakt 240 vorgesehen ist. In entsprechender Weise ist auch ein dreipoliger Taster (triple pole, triple throw, normally open, TPTTNO) zum vollständigen Trennen bzw. Verbinden der Steuereinrichtung 220 mit den beschriebenen Elementen des Akkupacks 140 möglich.

## Patentansprüche

1. Aufladbarer Energiespeicher (140), umfassend:
- einen aufladbaren elektrischen Akkumulator (210);
- eine Schnittstelle (225) zur Verbindung des Akkumulators (210) mit einem Gerät (110, 120, 130) Energieaustausch,
- eine Steuereinrichtung (220) zur Steuerung des Energieaustauschs des Akkumulators (210);
- wobei die Steuereinrichtung (220) einen Versorgungsspannungsanschluss (280) umfasst, der mit dem Akkumulator (210) verbunden ist, wenn an der Schnittstelle (225) ein Gerät (110-130) zum Energieaustausch angeschlossen ist, und ansonsten vom Akkumulator (210) getrennt ist,**dadurch gekennzeichnet, dass**
- die Schnittstelle (225) ein erstes Leitelement (245) umfasst, das mit dem Akkumulator (210) verbunden ist, sowie ein vom ersten getrenntes zweites Leitelement (250), das mit dem Versorgungsspannungsanschluss (280) verbunden ist, wobei die beiden Leitelemente (245, 250) derart an der Schnittstelle (225) angeordnet sind, dass sie gemeinsam von einem korrespondierenden Leitelement (230) des Geräts (110, 120, 130) zum Energieaustausch kontaktierbar sind.

2. Energiespeicher (140) nach Anspruch 1, **dadurch gekennzeichnet, dass** das erste Leitelement (245) dazu eingerichtet ist, Energie zwischen dem Gerät (110, 120, 130) und dem Akkumulator (210) zu übertragen.

3. Energiespeicher (140) nach einem der vorangehenden Ansprüche, **dadurch gekennzeichnet, dass** die Steuereinrichtung (220) einen weiteren Versorgungsspannungsanschluss (275) umfasst der fest mit dem Akkumulator (210) verbunden ist.

4. Energiespeicher (140) nach Anspruch 3, **dadurch gekennzeichnet, dass** der weitere Versorgungsspannungsanschluss (275) mit einem Masseanschluss des Akkumulators (210) verbunden ist.

5. System (100) zur Energiespeicherung (140), umfassend:
- einen Energiespeicher (140) nach einem der vorangehenden Ansprüche; und
- ein Gerät (110, 120, 130) zum Energieaustausch, das dazu eingerichtet ist, derart mit der Schnittstelle verbunden zu werden, dass der Versorgungsspannungsanschluss der Steuereinrichtung (220) mit dem Akkumulator (210) verbunden ist.

6. System (100) nach Anspruch 5, **dadurch gekennzeichnet, dass** das Gerät eine Ladeeinrichtung (130) für den Akkumulator (210) umfasst.

7. System (100) nach Anspruch 5 oder 6, **dadurch gekennzeichnet, dass** das Gerät einen mittels des Akkumulator (210) betreibbaren elektrischen Verbraucher (110, 120) umfasst.

8. System (100) nach einem der Ansprüche 5 bis 7, **dadurch gekennzeichnet, dass** der Energiespeicher (140) elektrisch und mechanisch dazu eingerichtet ist, an einer Vielzahl von alternativen Geräten (110, 120, 130) zum Energieaustausch betrieben zu werden.

## Claims

1. Chargeable energy store (140), comprising:
- a chargeable electrical storage battery (210);
- an interface (225) for connecting the storage battery (210) to an apparatus (110, 120, 130) energy exchange,
- a control device (220) for controlling energy exchange by the storage battery (210);
- wherein the control device (220) comprises a supply voltage connection (280) which is connected to the storage battery (210) when an apparatus (110-130) for energy exchange is connected to the interface (225), and otherwise is disconnected from the storage battery (210), **characterized in that**
- the interface (225) comprises a first guide element (245), which is connected to the storage battery (210), and a second guide element (250), which is separate from the first guide element and is connected to the supply voltage connection (280), wherein the two guide elements (245, 250) are arranged at the interface (225) in such a way that contact can be made with them jointly by a corresponding guide element (230) of the apparatus (110, 120, 130) for energy exchange.

2. Energy store (140) according to Claim 1, **characterized in that** the first guide element (245) is designed to transmit energy between the apparatus (110, 120, 130) and the storage battery (210).

3. Energy store (140) according to either of the preceding claims, **characterized in that** the control device (220) comprises a further supply voltage connection (275) which is permanently connected to the storage battery (210).

4. Energy store (140) according to Claim 3, **characterized in that** the further supply voltage connection (275) is connected to an earth connection of the storage battery (210).

5. System (100) for energy storage (140), comprising:
- an energy store (140) according to one of the preceding claims; and
- an apparatus (110, 120, 130) for energy exchange which is designed to be connected to the interface in such a way that the supply voltage connection of the control device (220) is connected to the storage battery (210).

6. System (100) according to Claim 5, **characterized in that** the apparatus comprises a charging device (130) for the storage battery (210).

7. System (100) according to Claim 5 or 6, **characterized in that** the apparatus comprises an electrical load (110, 120) which can be operated by means of the storage battery (210).

8. System (100) according to one of Claims 5 to 7, **characterized in that** the energy store (140) is electrically and mechanically designed to be operated from a large number of alternative apparatuses (110, 120, 130) for energy exchange.

## Revendications

1. Accumulateur d'énergie rechargeable (140), comprenant :
- un accumulateur électrique rechargeable (210) ;
- une interface (225) permettant de relier l'accumulateur (210) à un appareil (110, 120, 130) échange d'énergie,
- un dispositif de commande (220) permettant de commander l'échange d'énergie de l'accumulateur (210) ;
- dans lequel le dispositif de commande (220) comprend une borne de tension d'alimentation (280) qui est reliée à l'accumulateur (210) lorsqu'un appareil (110-130) est connecté à l'interface (225) à des fins d'échange d'énergie et qui, dans le cas contraire, est séparé de l'accumulateur (210),
**caractérisé en ce que**
- l'interface (225) comprend un premier élément conducteur (245) qui est relié à l'accumulateur (210), ainsi qu'un second élément conducteur (250) séparé du premier, qui est relié à la borne de tension d'alimentation (280), dans lequel les deux éléments conducteurs (245, 250) sont disposés au niveau de l'interface (225) de manière à ce qu'ils puissent être mis en contact en commun avec un élément conducteur (230) correspondant de l'appareil (110, 120, 130) à des fins d'échange d'énergie.

2. Accumulateur d'énergie (140) selon la revendication 1, **caractérisé en ce que** le premier élément conducteur (245) est conçu pour transmettre de l'énergie entre l'appareil (110, 120, 130) et l'accumulateur (210).

3. Accumulateur d'énergie (140) selon l'une quelconque des revendications précédentes, **caractérisé en ce que** le dispositif de commande (220) comprend une autre borne de tension d'alimentation (275) qui est reliée de manière fixe à l'accumulateur (210).

4. Accumulateur d'énergie (140) selon la revendication 3, **caractérisé en ce que** l'autre borne de tension d'alimentation (275) est reliée à une borne de masse de l'accumulateur (210).

5. Système (100) destiné à l'accumulation d'énergie (140), comprenant :
- un accumulateur d'énergie (140) selon l'une quelconque des revendications précédentes ; et
- un appareil (110, 120, 130) destiné à l'échange d'énergie, qui est conçu pour être relié à l'interface de manière à ce que la borne de tension d'alimentation du dispositif de commande (220) soit reliée à l'accumulateur (210).

6. Système (100) selon la revendication 5, **caractérisé en ce que** l'appareil comprend un dispositif de charge (130) destiné à l'accumulateur (210).

7. Système (100) selon la revendication 5 ou 6, **caractérisé en ce que** l'appareil comprend une charge électrique (110, 120) pouvant être mise en fonctionnement au moyen de l'accumulateur (210).

8. Système (100) selon l'une quelconque des revendications 5 à 7, **caractérisé en ce que** l'accumulateur d'énergie (140) est conçu pour être mis en fonctionnement électriquement et mécaniquement à des fins d'échange d'énergie sur une pluralité d'appareils différents (110, 120, 130).
